# EUROPEAN PATENT SPECIFICATION

(11) **EP 2 112 370 B1**
(45) Date of publication and mention of the grant of the patent: **31.08.2016**
(21) Application number: 08007762.1
(22) Date of filing: 22.04.2008
(51) Int. Cl.: F03B 11/06, F03B 13/08, F16C 39/02, F16C 39/06, F16C 32/04

(54) **A hydro-electric turbine having a magnetic bearing**
Hydroelektrische Turbine mit Magnetlager
Turbine hydroélectrique disposant d'un palier magnétique

(43) Date of publication of application: 28.10.2009
(73) Proprietor: OpenHydro Group Limited, Dublin 2 (IE)
(72) Inventor: Spooner, Ed, County Durham, DL13 1SL (GB); Dunne, Paul, Dublin 9 (IE)
(74) Representative: O'Neill, Brian

(56) References cited:
- EP-A- 1 878 913
- EP-A- 1 885 047
- WO-A-2007/043894
- DE-A1- 3 638 129
- GB-A- 1 413 835
- US-A1- 2005 005 592
- US-A1- 2005 031 442
- US-A1- 2007 018 459
- US-A1- 2007 164 626

## Description

### Field of the invention

The present invention is concerned with a hydro-electric turbine, and in particular an open centred turbine which utilises a magnetic bearing to provide support against axial thrust on a rotor during tidal flow and preferably also to support at least some of the weight of the rotor.

### Background of the Invention

Currently, and at a global scale, there is great concern surrounding the damage that the emission of CO₂ is causing to our environment, in particular the threat posed by global warming. One of the major sources of CO₂ emission is in the production of electricity, on a large scale, through the burning of fossil fuels. Electricity is however a commodity that has become essential to the survival of the human race, and there are thus vast resources currently being expended in seeking alternative means of generating large quantities of electricity without the use of fossil fuel. While nuclear energy is one such alternative, most societies are uncomfortable with the negative aspects of nuclear power and thus other more desirable solutions are required.

Renewable energy has thus come to the fore in recent years, with many projects being developed around solar energy, wind energy, and tidal power. Tidal flows in the sea provide an attractive source of renewable energy since they are highly predictable and are thus readily accepted by the electricity grid. This feature contrasts with the intermittent nature of wind power which is not sufficiently predictable to form a secure source of generation for the purpose of grid management and thus requires back-up generation held in readiness.

However, harnessing tidal energy does provide its own challenges, in particular with respect to general maintenance of the turbine in order to ensure continuing and efficient operation in the harsh submarine environment, which can damage or quickly wear moving parts such as bearings or the like, and thus negatively impact on the operation of the turbine. The use of a so called "open centre" turbine can improve bearing life compared with a conventional shaft based turbine, as the bearings must be located about the rim of the turbine and are therefore significantly larger in diameter. Such larger diameter bearings have a lighter load distribution, resulting is a slower rate of wear and therefore longer life. However these bearings will still suffer wear and will eventually require maintenance or replacement.

Prior art examples can be found in WO2007043894 and DE3638129.

It is therefore an object of the present invention to provide a hydroelectric turbine having an improved bearing design.

### Summary of the invention

The present invention therefore provides a hydroelectric turbine comprising a stator; a rotor housed for rotation within the stator; and at least one magnetic repulsion bearing at least partially supporting the rotor within the stator.

According to the invention, the magnetic bearing comprises rotor magnets mounted to the rotor and stator magnets mounted to the stator in alignment with the rotor magnets such as to generate an axial reactive force about the circumference of the rotor, in at least one direction, and to generate a radial reactive force at at least one location on the stator.

Preferably, the rotor magnets and the stator magnets are arranged such as to generate axial reactive forces in two opposing directions.

According to the invention, the rotor magnets are arranged in a substantially annular array and the stator magnets are arranged in opposing alignment to the rotor magnets, the stator magnets being P86420EP00/August 21, 2007
radially offset with respect to the rotor magnets at at least one location on the stator so as to generate the radial reactive force.

Preferably, the stator magnets are offset to the rotor magnets at locations which are, in use, at the top and bottom of the turbine.

Alternatively, the stator magnets are oriented in an annular array with the centre of the array below the axis of rotation of the turbine.

Preferably, the rotor magnets are disposed about a rim of the rotor and the stator magnets are disposed about a rim of the stator.

Preferably, the stator magnets are arranged in a pair of opposed substantially annular arrays defining an annular channel therebetween and in which channel the rotor magnets are disposed.

Preferably, the rotor magnets are arranged in a pair of opposed substantially annular arrays defining an annular channel therebetween and in which channel the stator magnets are disposed.

Preferably, the turbine comprises a flange extending radially outward from a rim of the rotor, the rotor magnets being mounted to the flange.

Preferably, the turbine comprises a flange extending radially inward from the stator, the stator magnets being mounted to the flange.

Preferably, the rotor magnets and the stator magnets are arranged in a plurality of radially adjacent concentric rings of alternate polarity progressing radially outwards.

Preferably, the turbine comprises a mechanical bearing adapted to provide radial support to the rotor.

Preferably, the rotor magnets and the stator magnets comprise permanent magnets.

Preferably, the rotor magnets comprise a first set of magnets mounted to one face of the flange and a second set of magnets mounted to an opposed face of the flange.

Preferably, the stator magnets comprises a first set of magnets mounted to one face of the flange and a second set of magnets mounted to an opposed face of the flange.

Preferably, the turbine comprises an open centre turbine.

Preferably, the hydroelectric turbine comprises a mechanical thrust bearing which is arranged and/or dimensioned so as to be load bearing only beyond a predefined axial displacement of the rotor relative to the stator.

Preferably, the mechanical thrust bearing is arranged and/or dimensioned to prevent contact between the stator and rotor magnets.

Preferably, the magnetic bearing is at least partially contained or embedded within the mechanical thrust bearing.

As used herein, the term "supporting" is intended to mean bearing all or part of the axial or lateral loading applied to the rotor by the tidal flow of water through the turbine, and which will be applied in two opposing directions dependant on the direction of tidal flow, and/or bearing the weight, or a part thereof, of the rotor.

### Brief description of the drawings

Figure 1 illustrates a perspective view of a hydroelectric turbine according to a first embodiment of the invention;
Figure 2 illustrates a sectioned side elevation of an upper part of the turbine illustrated in Figure 1;
Figure 3 illustrates a sectioned side elevation of a part of the magnetic bearing forming part of the turbine of Figures 1 and 2;
Figure 4 illustrates a sectioned side elevation of another portion of the magnetic bearing of the turbine of Figures 1 and 2;
Figure 5 illustrates a sectioned side elevation of a hydroelectric turbine according to a second embodiment of the present invention;
Figure 6 illustrates an enlarged view of a portion of the turbine illustrated in Figure 5; and
Figure 7 illustrates a front elevation of a portion of a magnetic bearing forming part of the turbines illustrated in both Figures 1 to 4 and Figures 5 and 6.

### Detailed Description of the Drawings

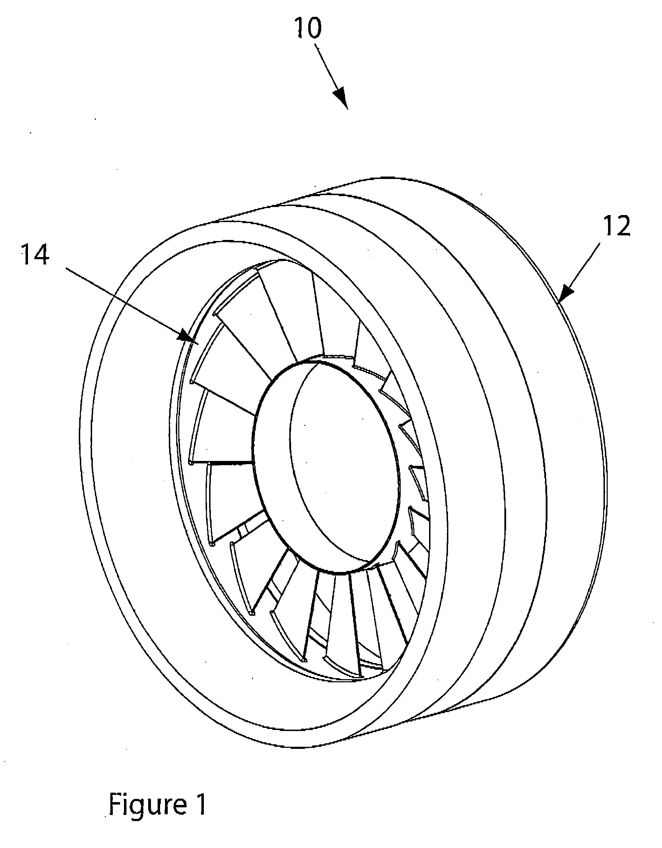

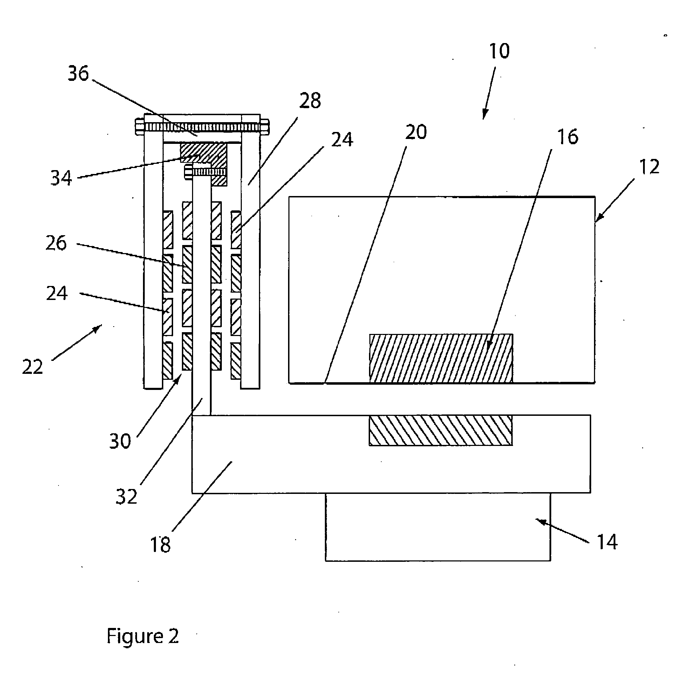

Referring now to Figures 1 to 4 and Figure 7 of the accompanying drawings, there is illustrated a first embodiment of a hydroelectric turbine, generally indicated as 10, for use in generating electricity from the tidal flow of water through the turbine 10. In the embodiment illustrated the turbine 10 comprises an annular stator 12 within which is housed for rotation a rotor 14. The turbine 10 is designed with an open centre and thus has no central shaft on which the rotor 14 is mounted or from which power may be extracted as a result of rotation of the rotor 14 due to tidal flow there through.

The turbine 10 therefore comprises a rim based generator 16, for example as described in co-pending European Application No. 06014667.7, and which will not be described in further detail hereinafter. Due to the absence of a central shaft, the generator 16 is provided about an outer rim 18 of the rotor 14 and an inner-rim 20 of the stator 12. A further consequence of the absence of the central shaft is the requirement to provide a rim based bearing arrangement for supporting the rotor 14 within the stator 12, both against axial loading due to the tidal flow of water flowing through the rotor 14 and to provide radial support to the rotor 14 in order to bear the weight of the rotor 14.

In the turbine 10 of the present invention a magnetic bearing 22 is provided between the stator 12 and rotor 14 in order to provide a contactless bearing which will therefore not undergo wear and should as a result require little or no maintenance. The bearing 22 is adapted, as will be described in detail hereinafter, to generate axial reactive forces in both axial directions in order to constrain the rotor 14, relative to the stator 12, against the forces experienced by the rotor 14 during tidal flow in both tidal directions. The bearing 22 is also preferably adapted to generate a radial reactive force to at least partially counteract the weight of the rotor 14, thereby reducing the load on any radial contact bearing, reducing the force required to effect rotation of the turbine 14 and so increasing the efficiency of the turbine 10 and reducing wear.

The bearing 22 comprises an array of stator magnets 24 fixed to the stator 12 as described hereinafter, and an array of rotor magnets 26 fixed for rotation with the rotor 14 and again as will be described in detail hereinafter.

The stator and rotor magnets 24, 26 are aligned relative to one another such as to generate the axial reactive forces experienced during tidal flow and the radial reactive force which will support at least part of the weight of the rotor 12.

The stator magnets 24 are arranged in a pair of opposing arrays, with a pair of supports 28 being mounted to or formed integrally with the stator 12 and onto which supports 28 the stator magnets 24 are mounted in suitable fashion. In this way a channel 30 is defined between the arrays of stator magnets 24, and in use the rotor magnets 26 are constrained for rotation within this channel 30. In the embodiment illustrated a flange 32 is mounted to or formed integrally with the rim 18 of the rotor 14, the flange 32 projecting radially outward into the channel 30. The rotor magnets 26 are provided in a pair of arrays, one of the arrays mounted on either face of the flange 32, and thus in opposing alignment with one of the arrays of stator magnets 24. It will be appreciated that an equivalent arrangement can be adopted in which the supports 28 are mounted on the rotor and define a channel rotating about a flange mounted on the stator.

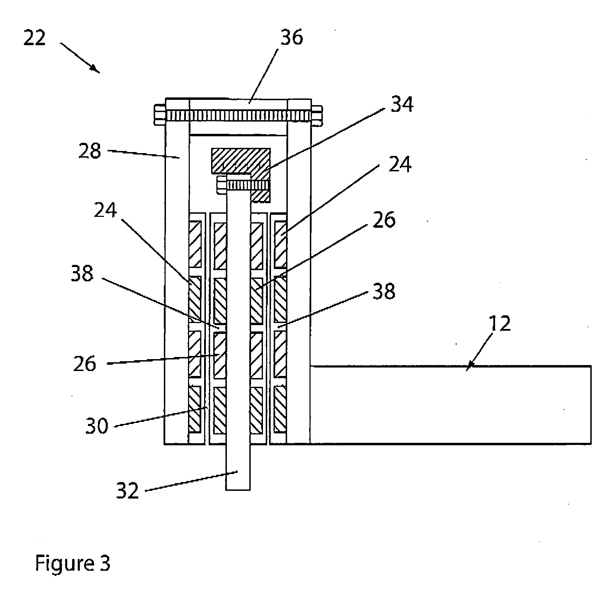

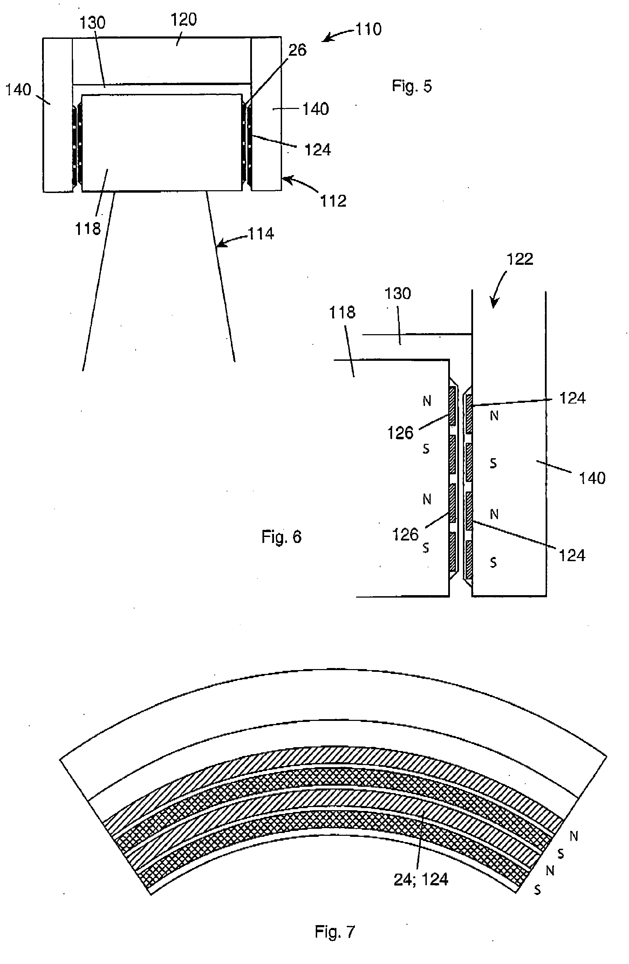

Referring now to Figures 3 and 7 it can be seen that both the stator magnets 24 and rotor magnets 26 are provided, in the embodiment illustrated, in four concentric rings located radially adjacent one another, and it will be appreciated from the following description that the number of these rings may be increased or decreased as required. It is also envisaged that while adjacent rings are spaced from one another in the embodiment illustrated, the adjacent rings could abut against one another in the radial direction. The concentric rings of both stator and rotor magnets 24, 26 alternate in polarity as they progress radially outwards. Each ring of stator magnets 24 is positioned to be in direct alignment with an opposing ring of the rotor magnets 26, and these opposing magnets are chosen to be of the same polarity, for example north north or south south. Thus, each set of opposing stator and rotor magnets 24, 26 repel each other in order to function as a magnetic repulsive bearing. The arrays of rotor magnets 26 on each face of the flange 32 are repelled by the respective opposing stator magnets 24, and the repulsive forces act in opposing directions in order to hold the flange 32 in a central position within the channel 30, so holding the rotor 14 in position relative to the stator 12. In the absence of tidal flow no axial force is generated and the rotor 14 adopts an axial position such that the two opposing pairs of magnet arrays produce equal and opposite axial force. When the tidal flow increases the rotor 14 axial position changes slightly so that the gap between rotor 14 and stator 12 magnet arrays on the downstream side of the magnetic bearing is reduced and the gap between the upstream arrays is increased. The repulsion force on the downstream side is now greater than that on the upstream side and the difference is sufficient to balance the force generated by the tidal flow.

A mechanical thrust bearing 38 may also be provided in which the bearing faces do not come into contact until the rotor 14 undergoes a predefined axial displacement under the influence of the tidal flow as described. When this bearing 38 engages it reacts part of the axial force. Consequently the maximum load on the magnetic bearing 22 is lessened and its dimensions can be reduced accordingly. The design of the magnetic bearing 22 does not need to incorporate a margin to accommodate load excursions arising from turbulence in the tidal flow. The load imposed on the mechanical thrust bearing 38 may be quite large; however, the mechanical bearing 38 is engaged only for short periods that occur only rarely and so its average rate of wear is very small.

The mechanical bearing 38 may also be arranged physically close to or surrounding the magnetic bearing 22 thereby preventing damage to the magnetic bearing 22 due to contact between the rotor 14 and stator 12 due to local distortions or vibration of the rotor and/or the stator rim.

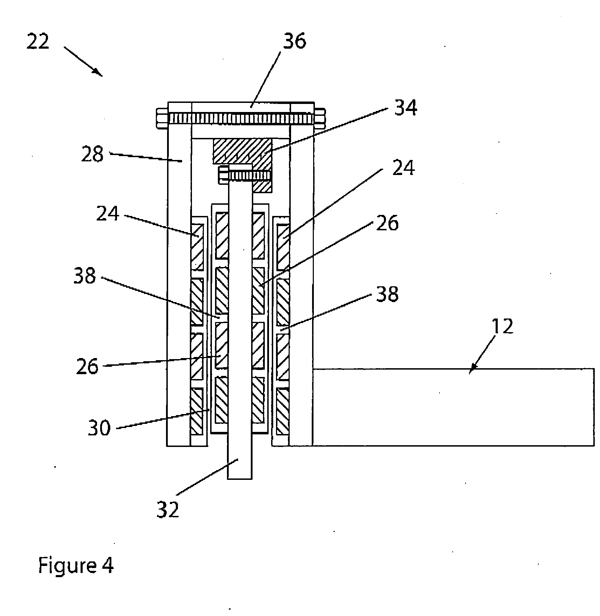

The faces of the mechanical thrust bearing 38 may be arranged to lie over the rotor and stator magnets 26, 24 as illustrated in Figure 4. The magnets 24, 26 may be thus embedded within the mechanical thrust bearing 38 and be protected by it from physical damage and from chemical attack by the surrounding seawater.

With the stator and rotor magnets 24, 26 in alignment as illustrated in Figure 3, the reactive forces generated are axial only, thereby resisting only lateral loading on the rotor 14 due to tidal flow. Referring however to Figure 4, at one or more locations about the stator 12 and preferably at the top and bottom dead centre of the stator 12, a section of each ring of stator magnets 24 is positioned to be offset to the opposing corresponding ring of rotor magnets 26. In this way, at these locations on the stator 12, the reactive force generated by the opposing stator and rotor magnets 24, 26 includes both an axial and a radial component

The axial component of the reactive force serves, as hereinbefore described, to retain the rotor 14 in position against axial loading due to tidal flow, while the radial component of the reactive force serves to bear the weight of the rotor 14, or at least a portion thereof. The stator magnets 24 are offset with respect to the rotor magnets 26 at both the bottom and/or top of the stator 12, such that this radial force is directed, in use, substantially vertically upward in order to compensate for the weight of the rotor 14. It is therefore possible to provide compensation for the rotor 14 weight without the use of buoyancy, thereby offering significant cost savings. The offset must be on the stator 12 as this is stationary during operation of the turbine 10, and it is necessary that the offset force act upwardly against gravity. The array of stator magnets 24 could for example take the form of a circular array of magnets but with the centre of that magnet array below the axis of rotation of the turbine 10.

In order to ensure the radial stability of the rotor 14, a mechanical bearing in the form of a plurality of arc shaped shoes 34 is bolted to the free end of the flange 32, in contact with correspondingly shaped arc sections 36 forming a continuous ring between the pair of supports 28, is provided. The shoes 34 may be formed from any suitable material, but are preferably stainless steel while the arc sections 36 are preferably plastic such as nylon. Positioning the mechanical bearing radially outwardly of the magnetic bearing 22 provides a large surface area so that the rate of wear is small. In use, however, and due to the radial force generated by the magnetic bearing 22, the force on the mechanical bearing is nominally zero. Detailed analysis of the magnetic characteristics confirms that the changing axial position of the rotor 14 with respect to the stator 12 has very little effect upon the magnitude of the radial force produced by the bearing 22.

Referring now to Figures 5 to 7 of the accompanying drawings, there is illustrated a second embodiment of a hydroelectric turbine according to the present invention, generally indicated as 110, again for use in generating electricity from the tidal flow of water through the turbine 110. In the second embodiment like components have been accorded like reference numerals, and unless otherwise stated perform a like function.

As with the first embodiment, the turbine 110 comprises an annular stator 112 within which is housed for rotation an opened-centred rotor 114. The rotor 114 comprises an outer rim 118 which during operation of the turbine 110 is constrained and rotates within the stator 112. Again a rim-based generator (not shown) is provided on the rim 118 and a rim 120 of the stator 112, in order to generate electricity in response to rotation of the rotor 114 relative to the stator 112.

The turbine 110 further comprises a magnetic bearing 122 provided between the stator 112 and the rotor 114. In this second embodiment the bearing 122 comprises annular arrays of stator magnets 124 which are suitably mounted on an inner face of each of a pair of sidewalls 140 of the stator 112. The pair of sidewalls 140 define a channel 130 within which the rim 118 is located. The bearing 122 further comprises corresponding annular arrays of rotor magnets 126 which are provided on opposing faces of the outer rim 118, in alignment with the stator magnets 124. Adjacent rows or annular rings of magnets in any given array alternate in polarity, as is clearly illustrated in Figure 7. However, rows or rings of magnets in opposing arrays of stator magnets 124 and rotor magnets 126 are of the same polarity in order to provide a magnetic repulsive bearing in the axial direction. However, as shown clearly in Figure 6, at at least one location on the turbine 110, and preferably at a number of locations, the stator magnets 126 are offset radially, in order to generate radial forces, in order to at least partially bear the weight of the rotor 114, as described above with reference to the first embodiment.

The present invention therefore provides an effectively contactless magnetic bearing for use in a hydroelectric turbine 10; 110 which, through design, is adapted to resist both axial and radial loads on the rotor 14; 114 of the turbine 10; 110.

## Claims

1. A hydroelectric turbine (10) comprising a stator (12); a rotor housed for rotation within the stator; at least one magnetic repulsion bearing (22) at least partially supporting the rotor within the stator, in which the magnetic bearing comprises rotor magnets (24) mounted to the rotor in a substantially annular array and stator magnets (26) mounted to the stator in opposing alignment to the rotor magnets such as to generate an axial reactive force about the circumference of the rotor in at least one direction, **characterized in that** the stator magnets being radially offset with respect to the rotor magnets at least one location on the stator so as to generate a radial reactive force.

2. A hydroelectric turbine according to claim 1, in which the rotor magnets and the stator magnets are arranged such as to generate axial reactive forces in two opposing directions.

3. A hydroelectric turbine according to claim 1 or 2 in which the stator magnets are offset to the rotor magnets at locations which are, in use, at the top and bottom of the turbine.

4. A hydroelectric turbine according to any of claims 1 to 3 in which the stator magnets are oriented in an annular array with the centre of the array below the axis of rotation of the turbine.

5. A hydroelectric turbine according to any preceding claim, wherein the rotor magnets are disposed about a rim of the rotor and the stator magnets are disposed about a rim of the stator.

6. A hydroelectric turbine according to any preceding claim, wherein the stator magnets are arranged in a pair of opposed substantially annular arrays defining an annular channel therebetween and in which channel the rotor magnets are disposed.

7. A hydroelectric turbine according to any preceding claim, wherein the rotor magnets are arranged in a pair of opposed substantially annular arrays defining an annular channel therebetween and in which channel the stator magnets are disposed.

8. A hydroelectric turbine according to any of claims 1 to 3 comprising a flange extending radially outward from a rim of the rotor, the rotor magnets being mounted to the flange.

9. A hydroelectric turbine according to any of claims 1 to 3 comprising a flange extending radially inward from the stator, the stator magnets being mounted to the flange.

10. A hydroelectric turbine according to any of claims 1 to 4 in which the rotor magnets and the stator magnets are arranged in a plurality of radially adjacent concentric rings of alternate polarity progressing radially outwards.

11. A hydroelectric turbine according to any preceding claim comprising a mechanical bearing adapted to provide radial support to the rotor.

12. A hydroelectric turbine according to any of claims 4, 5, 6 or 8, wherein the rotor magnets comprises a first set of magnets mounted to one face of the flange and a second set of magnets mounted to an opposed face of the flange.

13. A hydroelectric turbine according to any of claims 4, 5, 6 or 9, wherein the stator magnets comprises a first set of magnets mounted to one face of the flange and a second set of magnets mounted to an opposed face of the flange.

14. A hydroelectric turbine according to any preceding claim comprising a mechanical thrust bearing which is arranged and/or dimensioned so as to be load bearing only beyond a predefined axial displacement of the rotor relative to the stator.

15. A hydroelectric turbine according to claim 14 in which the mechanical thrust bearing is arranged and/or dimensioned to prevent contact between the stator and rotor magnets.

16. A hydroelectric turbine according to claim 14 or 15 in which the magnetic bearing is at least partially contained or embedded within the mechanical thrust bearing.

## Patentansprüche

1. Wasserturbine (10), die Folgendes umfasst: einen Stator (12); einen Rotor, der zum Drehen im Stator untergebracht ist; wenigstens ein Lager (22) mit magnetischer Abstoßung, das den Rotor wenigstens teilweise in dem Stator trägt, wobei das Magnetlager an dem Rotor in einer im Wesentlichen ringförmigen Anordnung montierte Rotormagnete (24) und an dem Stator in entgegengesetzter Ausrichtung zu den Rotormagneten montierte Statormagnete (26) umfasst, um eine axiale Reaktionskraft um den Umfang des Rotors in wenigstens einer Richtung zu erzeugen, **dadurch gekennzeichnet, dass** die Statormagnete mit Bezug auf die Rotormagnete an wenigstens einer Stelle auf dem Stator radial versetzt sind, um eine radiale Reaktionskraft zu erzeugen.

2. Wasserturbine nach Anspruch 1, wobei die Rotormagnete und die Statormagnete so angeordnet sind, dass sie axiale Reaktionskräfte in zwei entgegengesetzten Richtungen erzeugen.

3. Wasserturbine nach Anspruch 1 oder 2, wobei die Statormagnete zu den Rotormagneten an Stellen versetzt sind, die beim Gebrauch am oberen und unteren Ende der Turbine liegen.

4. Wasserturbine nach einem der Ansprüche 1 bis 3, wobei die Statormagnete in einer ringförmigen Anordnung zur Mitte der Anordnung unterhalb der Drehachse der Turbine orientiert sind.

5. Wasserturbine nach einem vorherigen Anspruch, wobei die Rotormagnete um einen Rand des Rotors angeordnet sind und die Statormagnete um einen Rand des Stators angeordnet sind.

6. Wasserturbine nach einem vorherigen Anspruch, wobei die Statormagnete in einem Paar von gegenüberliegenden, im Wesentlichen ringförmigen Anordnungen angeordnet sind, die einen ringförmigen Kanal dazwischen bilden, in dem die Rotormagnete angeordnet sind.

7. Wasserturbine nach einem vorherigen Anspruch, wobei die Rotormagnete in einem Paar von gegenüberliegenden, im Wesentlichen ringförmigen Anordnungen angeordnet sind, die einen ringförmigen Kanal dazwischen definieren, in dem die Statormagnete angeordnet sind.

8. Wasserturbine nach einem der Ansprüche 1 bis 3, die einen Flansch umfasst, der von einem Rand des Rotors radial auswärts verläuft, wobei die Rotormagnete an dem Flansch montiert sind.

9. Wasserturbine nach einem der Ansprüche 1 bis 3, die einen Flansch umfasst, der von dem Stator radial einwärts verläuft, wobei die Statormagnete an dem Flansch montiert sind.

10. Wasserturbine nach einem der Ansprüche 1 bis 4, wobei die Rotormagnete und die Statormagnete in mehreren radial benachbarten konzentrischen Ringen von abwechselnder Polarität radial auswärts fortschreitend angeordnet sind.

11. Wasserturbine nach einem vorherigen Anspruch, die ein mechanisches Lager umfasst, das zum Bereitstellen von radialer Abstützung für den Rotor ausgelegt ist.

12. Wasserturbine nach Anspruch 4, 5, 6 oder 8, wobei die Rotormagnete einen auf einer Fläche des Flanschs montierten ersten Satz von Magneten und einen auf einer gegenüberliegenden Fläche des Flanschs montierten zweiten Satz von Magneten umfassen.

13. Wasserturbine nach Anspruch 4, 5, 6 oder 9, wobei die Statormagnete einen auf einer Fläche des Flanschs montierten ersten Satz von Magneten und einen auf einer gegenüberliegenden Fläche des Flanschs montierten zweiten Satz von Magneten umfassen.

14. Wasserturbine nach einem vorherigen Anspruch, die ein mechanisches Axiallager umfasst, das so angeordnet und/oder dimensioniert ist, dass es nur jenseits einer vordefinierten axialen Verdrängung des Rotors relativ zum Stator lasttragend ist.

15. Wasserturbine nach Anspruch 14, wobei das mechanische Axiallager so angeordnet und/oder dimensioniert ist, dass es einen Kontakt zwischen den Stator- und den Rotormagneten verhindert.

16. Wasserturbine nach Anspruch 14 oder 15, wobei das Magnetlager wenigstens teilweise in dem mechanischen Axiallager enthalten oder eingebettet ist.

## Revendications

1. Turbine hydro-électrique (10) comportant un stator (12) ; un rotor logé à des fins de rotation à l'intérieur du stator ; au moins un palier à répulsion magnétique (22) supportant au moins partiellement le rotor à l'intérieur du stator, dans laquelle le palier magnétique comporte des aimants de rotor (24) montés sur le rotor selon un réseau sensiblement annulaire et des aimants de stator (26) montés sur le stator selon un alignement opposé aux aimants de rotor de manière à générer un couple de rappel dans le sens axial autour de la circonférence du rotor dans au moins une direction, **caractérisée en ce que** les aimants de stator sont décalés dans le sens radial par rapport aux aimants de rotor au niveau d'au moins un emplacement sur le stator de manière à générer un couple de rappel dans le sens radial.

2. Turbine hydro-électrique selon la revendication 1, dans laquelle les aimants de rotor et les aimants de stator sont agencés de manière à générer un couple de rappel dans le sens axial dans deux directions opposées.

3. Turbine hydro-électrique selon la revendication 1 ou la revendication 2, dans laquelle les aimants de stator sont décalés par rapport aux aimants de rotor au niveau d'emplacements qui se trouvent, lors de l'utilisation, en haut et en bas de la turbine.

4. Turbine hydro-électrique selon l'une quelconque des revendications 1 à 3, dans laquelle les aimants de stator sont orientés selon un réseau annulaire, le centre du réseau se trouvant en dessous de l'axe de rotation de la turbine.

5. Turbine hydro-électrique selon l'une quelconque des revendications précédentes, dans laquelle les aimants de rotor sont disposés autour d'une jante du rotor et les aimants de stator sont disposés autour d'une jante du stator.

6. Turbine hydro-électrique selon l'une quelconque des revendications précédentes, dans laquelle les aimants de stator sont agencés selon une paire de réseaux sensiblement annulaires opposés définissant un canal annulaire entre eux et canal dans lequel les aimants de rotor sont disposés.

7. Turbine hydro-électrique selon l'une quelconque des revendications précédentes, dans laquelle les aimants de rotor sont agencés selon une paire de réseaux sensiblement annulaires opposés définissant un canal annulaire entre eux et canal dans lequel les aimants de stator sont disposés.

8. Turbine hydro-électrique selon l'une quelconque des revendications 1 à 3, comportant une bride s'étendant dans le sens radial vers l'extérieur depuis une jante du rotor, les aimants de rotor étant montés sur la bride.

9. Turbine hydro-électrique selon l'une quelconque des revendications 1 à 3, comportant une bride s'étendant dans le sens radial vers l'intérieur depuis le stator, les aimants de stator étant montés sur la bride.

10. Turbine hydro-électrique selon l'une quelconque des revendications 1 à 4, dans laquelle les aimants de rotor et les aimants de stator sont agencés selon une pluralité d'anneaux concentriques adjacents dans le sens radial de polarité alternée progressant vers l'extérieur dans le sens radial.

11. Turbine hydro-électrique selon l'une quelconque des revendications précédentes, comportant un palier mécanique adapté à des fins de mise en oeuvre d'un support radial sur le rotor.

12. Turbine hydro-électrique selon l'une quelconque des revendications 4, 5, 6 ou 8, dans laquelle les aimants de rotor comportent un premier ensemble d'aimants montés sur une face de la bride et un deuxième ensemble d'aimants montés sur une face opposée de la bride.

13. Turbine hydro-électrique selon l'une quelconque des revendications 4, 5, 6 ou 9, dans laquelle les aimants de stator comportent un premier ensemble d'aimants montés sur une face de la bride et un deuxième ensemble d'aimants montés sur une face opposée de la bride.

14. Turbine hydro-électrique selon l'une quelconque des revendications précédentes, comportant un palier de butée mécanique qui est agencé et/ou dimensionné de manière à être porteur uniquement au-delà d'un déplacement axial prédéfini du rotor par rapport au stator.

15. Turbine hydro-électrique selon la revendication 14, dans laquelle le palier de butée mécanique est agencé et/ou dimensionné pour empêcher tout contact entre les aimants de stator et les aimants de rotor.

16. Turbine hydro-électrique selon la revendication 14 ou la revendication 15, dans laquelle le palier magnétique est contenu ou encastré au moins partiellement à l'intérieur du palier de butée mécanique.
